(19) Europäisches Patentamt
European Patent Office
Office européen des brevets

(11) **EP 2 096 611 A1**

(12) **DEMANDE DE BREVET EUROPEEN**

(43) Date de publication:
**02.09.2009 Bulletin 2009/36**

(51) Int Cl.:
***G08G 1/04*** *(2006.01)*

(21) Numéro de dépôt: **09153946.0**

(22) Date de dépôt: **27.02.2009**

(84) Etats contractants désignés:
**AT BE BG CH CY CZ DE DK EE ES FI FR GB GR HR HU IE IS IT LI LT LU LV MC MK MT NL NO PL PT RO SE SI SK TR**
Etats d'extension désignés:
**AL BA RS**

(30) Priorité: **28.02.2008 FR 0851279**

(71) Demandeur: **Neavia Technologies**
**94000 Creteil (FR)**

(72) Inventeur: **Wilbrod, Jean-Hubert**
**94100, SAINT MAUR DES FOSSES (FR)**

(74) Mandataire: **Myon, Gérard Jean-Pierre et al**
**Cabinet Lavoix Lyon**
**62, rue de Bonnel**
**69448 Lyon Cedex 03 (FR)**

(54) **Procédé et dispositif de détection multi-technologie de véhicule**

(57) Procédé de détection de véhicules sur au moins un tronçon d'une voie de circulation mettant en oeuvre au moins deux types de détection choisis parmi :
- une détection vidéo comprenant une étape d'acquisition et traitement d'images vidéo d'au moins une zone, dite de surveillance vidéo du tronçon de voie;
- une détection acoustique comprenant une étape d'acquisition et de traitement du son en provenance d'au moins une zone, dite de surveillance acoustique, du tronçon de voie;

- une détection radar comprenant une étape d'émission d'un rayonnement électromagnétique micro-onde en direction d'au moins une zone, dite de surveillance radar, du tronçon de voie et une étape d'acquisition et de traitement du rayonnement électromagnétique micro-onde réfléchi,

et comprenant au moins une étape de traitement des résultats des détections optique et/ou sonore et/ou radar pour délivrer une information présence ou non d'au moins un véhicule.

Fig.2

**Description**

La présente invention concerne le domaine technique de la détection de véhicules sur une voie de circulation afin, par exemple mais non exclusivement, d'en détecter les conditions de circulation.

A cet effet, il a été proposé de procéder à une mesure du niveau sonore en bordure de route afin de, notamment, déterminer l'intensité du trafic, comme cela est par exemple décrit dans les demandes FR 2 675 610, WO 2005/073736 ou encore FR 2 812 402. Toutefois, l'information délivrée par l'analyse du régime sonore ne permet pas toujours de quantifier précisément la nature du trafic et se trouve être sensible aux perturbations extérieures, notamment en provenance de voie de circulation non surveillée.

Afin de disposer d'informations plus précises, il est également connu de recourir à une surveillance vidéo faisant intervenir un traitement des images permettant de procéder à un comptage, ainsi qu'éventuellement à une évaluation de la vitesse de déplacement des véhicules, ou à une détection d'incident, comme cela est, par exemple décrit dans les demandes EP 0 396 432 ou EP 588 815 ou encore EP 1 710 767.

Il a également été envisagé d'assurer la surveillance des différentes voies de circulation d'un tronçon de route au moyen de systèmes radars à micro-ondes encore appelés radar doppler comme cela est, par exemple, décrit dans les demandes GB 2 389 947 et GB 2 425 010 ou encore US 2007/0257819.

Si ces différentes technologies donnent individuellement satisfaction pour la surveillance et l'évaluation de la nature et de la régularité du trafic sur la voie surveillée, elles présentent néanmoins l'inconvénient d'être sensibles selon les types de détection utilisés, aux conditions atmosphériques, au trafic sur les voies opposées ou encore à la présence dans les champs de détection de leurres mobiles susceptibles d'être identifiés, à tord, comme des véhicules en mouvement alors même, par exemple qu'aucun véhicule n'est présent sur la voie dans le sens de circulation surveillé. Ainsi, les dispositifs de surveillance évoqués précédemment ont un taux d'erreurs de l'ordre du pourcent. Si de tels défauts ne sont pas toujours rédhibitoires pour la quantification du trafic, ils peuvent devenir particulièrement gênants lorsque les dispositifs de surveillance sont destinés à émettre des messages d'alerte à destination des forces de l'ordre pour prévenir les situations d'accident, comme cela est par exemple le cas pour la détection des véhicules en contre sens sur les voies de circulation autoroutières, notamment. En effet, il est absolument nécessaire pour la détection de tels évènements d'avoir des taux d'erreurs très faibles, de l'ordre de un pour un million, pour que les utilisateurs fassent confiance au système et réagissent de manière appropriée à chaque alerte.

Afin d'atteindre un tel objectif et d'offrir des procédés et systèmes de surveillance plus fiables que ceux selon l'art antérieur, l'invention propose un procédé de détection de véhicules sur au moins un tronçon d'une voie de circulation mettant en oeuvre :

- une détection acoustique comprenant une étape d'acquisition et de traitement du son en provenance d'au moins une zone, dite de surveillance acoustique, du tronçon de voie ;

au moins un type de détection choisi parmi :

- une détection vidéo comprenant une étape d'acquisition et traitement d'images vidéo d'au moins une zone, dite de surveillance vidéo du tronçon de voie ;
- une détection radar comprenant une étape d'émission d'un rayonnement électromagnétique micro-onde en direction d'au moins une zone, dite de surveillance radar, du tronçon de voie et une étape d'acquisition et de traitement du rayonnement électromagnétique micro-onde réfléchi,

et comprenant au moins :

- une étape de traitement automatique des résultats des détections optique et/ou sonore et/ou radar pour délivrer une information présence ou non d'au moins un véhicule.

La mise en oeuvre de deux types distincts de détection pour assurer l'évaluation du trafic sur le tronçon surveillé de la voie de circulation permet de bénéficier d'une certaine redondance d'informations en utilisant des détections qui ne sont pas sensibles aux mêmes types de leurres et permet ainsi de réduire substantiellement les taux de fausses alertes. En effet, une détection vidéo pourra être sensible aux conditions de visibilité liées à des facteurs atmosphériques, tels que le brouillard ou les averses orageuses, tandis qu'une détection au radar ne sera pas sensible aux conditions de visibilité mais pourra être affecté par le déplacement, à proximité de la zone de surveillance radar mais en dehors de cette dernière, d'objets volumineux susceptibles de générer un écho radar. De même, la détection radar pourra être sensible au passage dans le lobe d'émission et de réception radar d'oiseaux, tandis que la détection acoustique ne sera pas sensible à de tels types de perturbations pour n'être affectée que par le niveau du bruit de fond. Ainsi, l'étape de comparaison du procédé selon l'invention permet d'éviter les fausses alertes en éliminant les cas où il n'y a pas concordance entre les résultats des deux détections.

Selon une caractéristique de l'invention, le procédé de détection met en oeuvre les trois types de détections. Une telle combinaison des trois types de détection permet de fiabiliser les résultats dans la mesure où les détections ne sont pas sensibles au même type de leurre ou de perturbation.

Selon une autre caractéristique de l'invention, l'étape de traitement automatique des résultats comprend alors une comparaison des résultats pour conclure à la présence ou non d'un véhicule en cas de concordance des résultats d'au moins deux des trois types de détections.

L'utilisation en permanence de trois types distincts de détection, puis la comparaison du résultat des trois types pour conclure à la survenance d'un évènement donné, tel que par exemple la présence ou non d'un véhicule, qu'en cas de concordance de deux au moins des résultats des trois types permet de réduire plus encore les risques de fausses alertes ou de résultats erronés. De plus, cela permet, en cas d'indisponibilité de l'un des trois types de détection, de continuer à pouvoir mettre en oeuvre le procédé et donc de ne pas empêcher la surveillance même si sa robustesse est éventuellement susceptible de décroître.

Selon une autre caractéristique de l'invention, et toujours dans le cas de la mise en oeuvre simultanée des trois types de surveillance, l'étape de traitement automatique des résultats conclut à la présence du véhicule en cas de concordance des résultats des trois types de détections.

La nécessité imposée par cette caractéristique d'une concordance des résultats des trois types de détection permet de réduire plus encore, voire d'annuler les erreurs de détection, ce qui peut être essentiel lorsque le procédé vise à détecter la survenance d'incident grave, comme la détection de véhicules en contresens.

Selon une caractéristique de l'invention, au moins une des zones de surveillance acoustique, radar ou vidéo est distincte d'au moins une autre zone de surveillance. Cette caractéristique de l'invention permet, par la décorrélation spatiale de deux zones de surveillance au moins, de réduire encore la sensibilité du procédé selon l'invention aux leurres ou aux perturbations extérieures.

Bien entendu, il pourrait également être envisagé que les zones de surveillance vidéo, acoustique et radar soient distinctes les unes des autres, ou encore que l'une des zones de surveillance acoustique, radar ou vidéo soit distincte des deux autres zones de surveillance qui peuvent, par ailleurs se chevaucher. Au sens de l'invention, les zones de surveillance sont considérées comme distinctes lorsqu'elles ne présentent aucune surface commune.

Par ailleurs, lorsque les zones de détection sont dissociées ou distinctes, la comparaison, entre le résultat de l'une des détections avec le résultat d'une autre détection, est effectuée sur la base d'un décalage temporel déterminé en fonction de la vitesse, éventuellement du sens du déplacement du véhicule et de la distance entre les zones de surveillance des détections dont les résultats sont comparés.

Selon l'invention, chacune des détections peut être effectuée à une fréquence identique ou, au contraire, à des fréquences distinctes.

Ainsi, selon une caractéristique de l'invention, la détection vidéo effectue les étapes d'acquisition et de traitement à une fréquence $f_v$ suffisante pour permettre au moins deux acquisitions d'un véhicule circulant dans la zone de surveillance vidéo à une vitesse de référence Vr donnée.

Selon une autre caractéristique de l'invention, la détection radar effectue les étapes d'émission, d'acquisition et de traitement à une fréquence $f_r$ suffisante pour permettre au moins deux acquisitions d'un véhicule circulant dans la zone de surveillance vidéo à une vitesse de référence Vr donnée.

Selon encore une autre caractéristique de l'invention, la détection acoustique effectue les étapes d'acquisition et de traitement à une fréquence $f_a$ suffisante pour permettre au moins deux acquisitions d'un véhicule circulant dans la zone de surveillance vidéo à une vitesse de référence Vr donnée.

Selon une caractéristique de l'invention, les fréquences d'acquisition et de traitement seront choisies pour permettre une identification convenable des véhicules circulant à grande vitesse, comme par exemple des véhicules circulant à une vitesse de référence de l'ordre de 200 km/h, voire 230 km/h, de manière à pouvoir détecter les cas de vitesse excessive susceptibles d'entraîner des accidents dans des conditions de circulation difficile.

Selon une caractéristique de l'invention, et afin de tenir compte des fréquences de traitement éventuellement différentes liées notamment à des contraintes technologiques, ou à des impératifs d'économie d'énergie, le traitement des résultats est effectué à une fréquence inférieure ou égale à la plus petite des trois fréquences $f_v$, $f_a$, $f_r$.

Selon l'invention, chacun des types de surveillance peut fournir une information brute binaire de présence ou non d'un véhicule. Toutefois, chacun des types de surveillance peut également fournir une information enrichie. Ainsi, selon une caractéristique de l'invention, la détection vidéo fournit au moins une information de présence d'un mobile dans la zone de surveillance vidéo et un indice de confiance vidéo lié à l'information de présence.

Selon une autre caractéristique de l'invention, la détection vidéo fournit des informations de sens et de vitesse de déplacement du mobile.

Selon encore une autre caractéristique de l'invention, la détection vidéo fournit des informations de dimension du véhicule. La fourniture de ce type d'informations permet d'assurer à la fois une analyse, quantitative et qualitative du trafic, utile à la gestion du trafic routier ainsi que du réseau pour son entretien et/ou son dimensionnement.

De la même manière, selon une caractéristique de l'invention, la détection sonore fournit une information de présence d'une source sonore dans la zone de surveillance acoustique, et un indice de confiance acoustique lié à l'information de présence.

Selon une autre caractéristique de l'invention, la détection sonore fournit une information de sens de déplacement la source sonore.

Selon encore une autre caractéristique de l'invention, la détection sonore fournit une information de puissance de la source sonore.

De la même manière, selon une caractéristique de l'invention, la détection radar fourni une indication de présence d'un mobile dans la zone de surveillance radar et un indice de confiance radar lié à l'information de présence.

Selon une autre caractéristique de l'invention, la détection radar fournit un sens et une vitesse de déplacement du mobile.

Selon une caractéristique supplémentaire de l'invention, le radar fournit simultanément une vitesse de déplacement du mobile et une distance du mobile au radar. Cette caractéristique avantageuse de l'invention permet d'éliminer les fausses détections, notamment en comparant la distance fournie par la détection radar avec la distance entre le radar et la zone de surveillance radar.

L'expérience a montré que les informations issues de certains types de détection sont plus fiables que celles issues d'autres types, aussi, selon une caractéristique de l'invention, de l'étape de traitement des résultats des acquisitions une prépondérance est donnée aux informations issues de l'acquisition vidéo et/ou radar.

Selon l'invention, l'étape de traitement et de comparaison des informations issues des types de détection mis en oeuvre peut fournir des informations binaires du type présence ou non d'un véhicule, mais également des informations qualitatives et quantitatives. Ainsi, selon une caractéristique de l'invention, à l'issue de l'étape de traitement il est délivré au moins une des informations suivante :

- présence de véhicule,
- vitesse de véhicule,
- vitesse moyenne,
- taux d'occupation des voies,
- débit de véhicules,
- catégorie ou taille des véhicules,
- présence ou non d'un véhicule en contre sens.

Ainsi, le procédé de détection selon l'invention peut être mis en oeuvre pour assurer différents types de surveillances quant à la nature et au volume du trafic mais également pour détecter des anomalies. Les informations quantitatives, telles que débit de véhicules, vitesses moyennes et/ou taux d'occupation des voies, peuvent être par exemple calculées en effectuant des sommations temporelles à partir des informations relatives à chaque véhicule ou mobile repéré par le procédé selon l'invention.

Selon une caractéristique de l'invention, il est délivré une information de contresens en cas de concordance des informations indiquant un véhicule en contresens issues au moins des acquisitions vidéo et radar.

Le procédé selon l'invention vise principalement à fournir des informations quantitatives ou qualitatives sur le trafic, c'est-à-dire des informations représentant un faible volume de données numériques particulièrement adaptées à une transmission de courte durée, voire de faible puissance par voie hertzienne. Toutefois, le procédé selon l'invention peut également prévoir un enregistrement d'images susceptible par exemple, mais non exclusivement, de faire l'objet d'une transmission dans des circonstances prédéfinies. Ainsi, selon une caractéristique de l'invention, le procédé comprend une étape enregistrement d'images du tronçon de voie selon une séquence correspondant un nombre donnés des images les plus récentes. En enregistrant des images à intervalles réguliers et en ne conservant que les $n$ dernières images, il est possible de stocker ces images temporairement sous la forme de fichiers numériques ne requérant qu'un espace dans le stockage limité faible consommateur d'énergie. Ces images ne peuvent alors, par exemple, être utilisées qu'en cas de survenance d'incident ou d'évènement prédéterminé.

Ainsi, selon une caractéristique de l'invention, en cas de présence d'un véhicule en contre sens, le procédé comprend une étape de transmission de la séquence d'image en cours d'enregistrement au moment de la détection du contresens.

Selon encore une autre caractéristique de l'invention, afin de limiter la consommation énergétique, seule l'une des détections n'est active en permanence et l'autre, ou éventuellement les autres détections ne sont activées que lorsqu'il y a détection d'un mobile ou d'un véhicule ayant des caractéristiques de déplacement données, par exemple contresens ou vitesse supérieure à un seuil spécifique.

L'invention concerne également un dispositif de détection de véhicules sur au moins un tronçon d'une voie de circulation comprenant :

- des moyens de détection acoustique comprenant au moins un microphone disposé de manière à enregistrer le son en provenance d'au moins une zone, dite de surveillance acoustique, du tronçon de voie et des moyens de traitement du son ;

un moyen de détection choisi parmi :

- des moyens détection vidéo comprenant une camera vidéo disposée de manière à surveiller au moins une zone, dite de surveillance vidéo du tronçon de voie et des moyens de traitement d'images vidéo fournies par la camera vidéo ;
- des moyen de détection radar comprenant une source de micro-ondes émettant en direction d'au moins une zone, dite de surveillance radar, du tronçon de voie, des moyens de réception du rayonnement électromagnétique micro-onde réfléchi, et des moyens de traitement du rayonnement réfléchi ;

Le dispositif de détection comprend également une unité de traitement raccordés au moyens de détections et adaptés pour délivrer automatiquement au moins une information de présence ou non d'au moins un véhicule ;

les moyens de traitement et l'unité de traitement étant adaptés pour mettre en oeuvre le procédé selon l'invention.

Selon une caractéristique de l'invention, le dispositif de détection comprend des moyens de communication hertzienne raccordés à l'unité de traitements et adaptés pour au moins assurer la transmission des informations issues de l'unité de traitement.

Selon une autre caractéristique de l'invention, les moyens de communication hertzienne sont adaptés pour relayer des informations en provenance d'au moins un autre dispositif de détection.

La mise en oeuvre d'un tel dispositif de détection pourvu de moyens de communication hertzienne est particulièrement adaptée à la réalisation d'un réseau de dispositifs de détection disposés le long d'une voie de circulation. Ce réseau est, par exemple autonome et assure la diffusion des informations issues de chacun des dispositifs de détection du réseau par répétition jusqu'à une tête de réseau reliée à un poste de commandement ou de surveillance de la voie équipée du réseau de dispositifs selon l'invention. Ce réseau présente en outre, l'avantage de ne nécessiter aucun câblage particulier pour la fourniture d'énergie et la transmission des informations issues de chacun des dispositifs.

La mise en oeuvre d'un réseau de dispositifs selon l'invention permet, en outre, d'effectuer une comparaison entre les informations issues de deux dispositifs distincts pour augmenter encore la fiabilité de la détection, notamment en ce qui concerne l'identification des incidents, et plus particulièrement des contre sens. Ainsi, selon une autre caractéristique de l'invention, les moyens de communication hertzienne sont adaptés pour recevoir des informations d'un autre dispositif de détection et l'unité de traitement est adaptée pour traiter les informations en provenance de l'autre dispositif de détection.

Selon une caractéristique de l'invention visant à conférer une certaine autonomie au dispositif selon l'invention comme évoqué précédemment. Le dispositif de détection comprend au moins une batterie électrique d'alimentation du dispositif et des moyens de charge de cette batterie.

Selon l'invention, les moyens de charge peuvent être réalisés de toute manière appropriée et, par exemple comprendre un système d'éoliennes ou encore un panneau photovoltaïque.

Le dispositif de surveillance selon l'invention peut être implanté en différents endroits, par exemple sur un portique surplombant une route ou encore sur un pont. Selon une caractéristique de l'invention, le dispositif comprend un mat ou poteau sur lequel sont adaptés en hauteur les différents éléments constitutifs du dispositif.

Selon une autre caractéristique de l'invention, afin de limiter la consommation énergétique du dispositif, l'unité de traitement est adaptée pour n'assurer le fonctionnement permanent que d'un seul type de moyens de détection et pour ne déclencher le fonctionnement d'un autre type ou des autres types de moyens de détection que si les moyens de détection en fonctionnement permanent détectent un mobile et/ou une situation particulière comme par exemple un contresens ou une vitesse excessive.

Bien entendu les différentes caractéristiques du procédé et/ou du dispositif selon l'invention peuvent être associées les unes avec les autres selon diverses combinaisons dans la mesure où elles ne sont pas incompatibles ou exclusives les unes des autres.

Par ailleurs, diverses autres caractéristiques et avantages de l'invention ressortent de la description effectuée ci-dessous en référence aux dessins annexés qui illustrent des formes non limitatives de mise en oeuvre du procédé et de réalisation du dispositif selon l'invention.

La figure 1 est une représentation schématique d'un dispositif de détection selon l'invention, autonome et adapté sur un mat.

La figure 2 est une vue schématique d'un tronçon de voie routière surveillé au moyen du dispositif de détection tel qu'illustré à la figure 1.

La figure 3 est un diagramme schématique du procédé de détection selon l'invention.

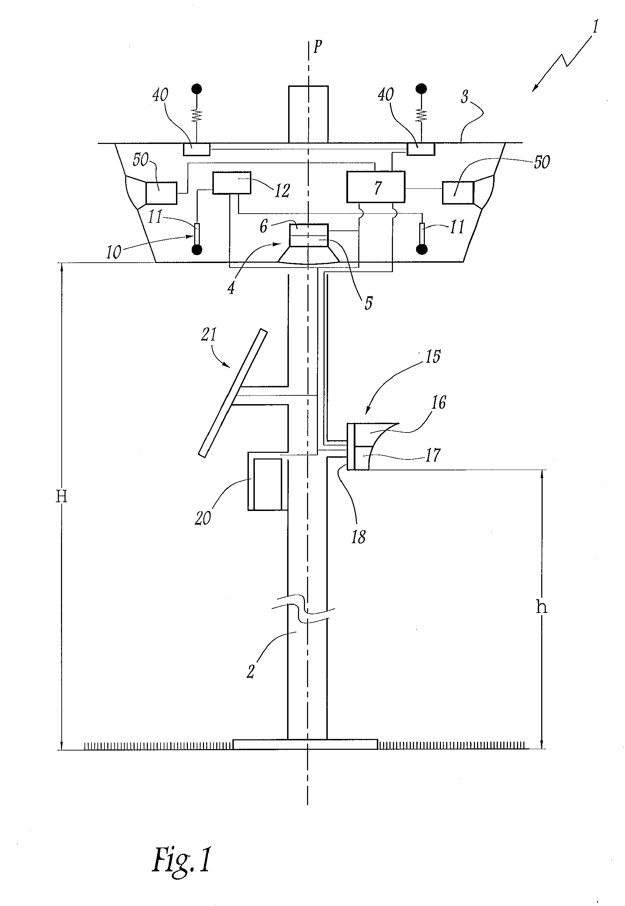

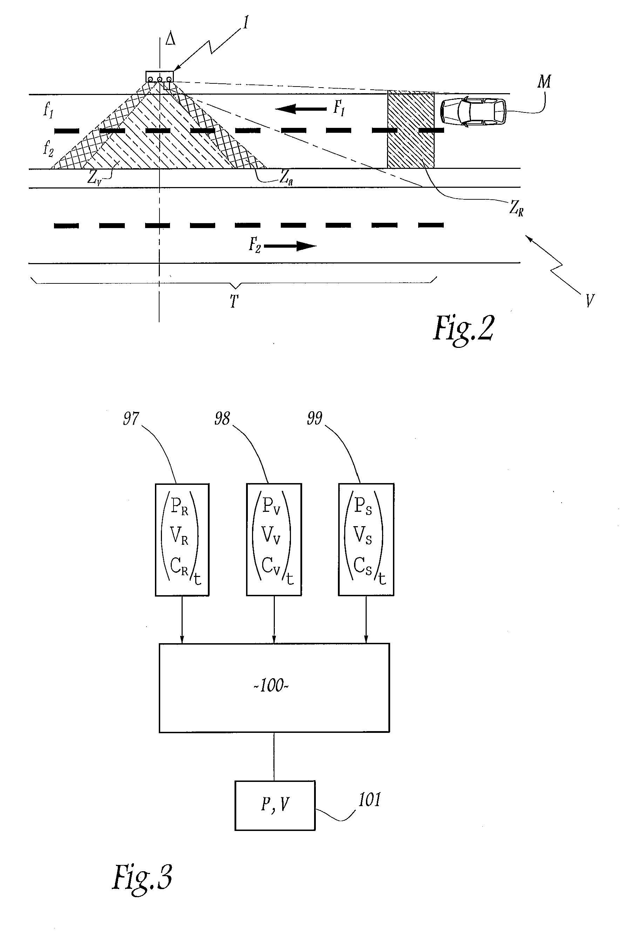

Le dispositif de détection selon l'invention, tel qu'illustré schématiquement à la figure 1 et désigné dans son ensemble par la référence 1, est par exemple destiné à être placé en bordure d'un tronçon T d'une voie de circulation C, comme le montre la figure 2.

Selon l'exemple illustré, le dispositif de détection 1 comprend un mat 2 qui porte à une hauteur de plusieurs mètres, par exemple de l'ordre de 6 à 12 mètres, un boîtier 3 renfermant des moyens de détection et de traitement. Selon l'exemple illustré, le boîtier 3 accueille des moyens de détection vidéo 4 comprenant, d'une part, une caméra vidéo 5 dont l'axe optique $\Delta$ est situé dans un plan perpendiculaire P à la direction de déplacement des véhicules sur la voie de circulation V. Ainsi, la caméra vidéo 5 assure l'acquisition d'images d'une zone de surveillance vidéo $Z_v$ du tronçon de voie V. Les moyens de détection vidéo 4 comprennent, d'autre part, des moyens 6 de traitement des images vidéo fournies par la caméra vidéo 5. Les moyens de traitement des images 6 sont, en outre raccordés à une unité de traitement 7 disposée également à l'intérieur du boîtier 3.

Le dispositif de détection 5 comprend également des moyens de détection acoustiques 10 qui comprennent au moins un et, selon l'exemple illustré, deux micros 11 disposés de part et d'autre du plan P de manière à enregistrer le son d'une zone de surveillance acoustique $Z_a$. Selon l'exemple illustré, la zone de surveillance acoustique possède le même plan de symétrie P que la zone de surveillance vidéo $Z_v$ et couvre un vo-

lume ou une surface légèrement supérieure à celle de la zone de surveillance vidéo $Z_v$. Les microphones 11 sont, en outre, raccordés à des moyens de traitement du son 12, pouvant par exemple être constitués par un circuit électronique de traitement du signal (DSP « Digital Signal Processor »). Les moyens de traitement du son 12 sont également raccordés à l'unité de traitement 7.

Le dispositif de détection comprend en outre des moyens 15 de détection radar composés notamment d'une source de micro-ondes 16 émettant un rayonnement micro-onde en direction d'une zone de surveillance radar $Z_r$ distincte des zones de surveillance vidéo $Z_v$ et acoustique $Z_a$. Afin d'obtenir une bonne décorrélation entre les informations fournies par les moyens de détection radar 15, d'une part et les moyens de détection vidéo 4 et acoustique 10, d'autre part, les zones $Z_v$ et $Z_r$ seront séparés d'une distance de quelques dizaines de mètres et, par exemple de l'ordre de 30 mètres. Les moyens de détection radar 15 comprennent également des moyens 17 de réception du rayonnement électromagnétique micro-ondes réfléchi et des moyens de traitement 18 du rayonnement réfléchi. Selon l'exemple illustré, les moyens de détection radar 15 sont situés à l'extérieur du boîtier 3 en étant placés à une hauteur $\underline{h}$ inférieure à la hauteur H du boîtier 3 et, par exemple de l'ordre de 2 à 3 mètres. Les moyens de traitement 18 sont alors raccordés à l'unité de traitement 7 par l'intermédiaire d'un circuit circulant le long du mat 2 à l'intérieur ou à l'extérieur de ce dernier. Afin de faciliter l'installation du dispositif de détection, ce dernier est conçu, selon l'exemple illustré, pour être autonome d'un point de vue de la fourniture d'énergie et comprend à cet effet au moins une batterie électrique 20 d'alimentation de l'ensemble des composants du dispositif 1. La batterie 20 est alors associée à des moyens de charge 21 comprenant, selon l'exemple illustré, un panneau photovoltaïque.

Le dispositif de surveillance 1, tel qu'ainsi constitué permet d'assurer une surveillance du tronçon T de la voie de circulation V, conformément au procédé selon l'invention.

A cet effet, les moyens de traitement 6, 12, 18, 7 du dispositif de détection 1 sont conçus de manière à gérer l'ensemble des files correspondant à un même sens de circulation, tel que par exemple indiqué par la flèche $F_1$ de la figure 2, séparément et de façon indépendante de l'ensemble des files correspondant à un sens normal de circulation opposée, tel que par exemple indiqué par la flèche $F_2$. Cette séparation des deux sens de circulation pour le traitement est assurée même si les moyens de détection du dispositif 1 sont susceptibles de couvrir simultanément les deux sens de circulation du tronçon T de la voie V. Aussi, le procédé de détection ne sera décrit qu'en relation avec la circulation sur les files $f_1$ et $f_2$ ayant un sens normal de circulation de droite à gauche sur la figure 2.

Dans le cas de la détection radar, cette sélectivité des zones surveillées peut notamment être réalisée par les moyens de traitement 18, qui sont conçus pour ne tenir compte que des échos issus de la zone de surveillance radar $Z_r$ sur la base par exemple du temps de vol des ondes, selon des technologies et des techniques bien connues de l'homme du métier. De la même manière, les moyens de traitement vidéo 6 sont adaptés pour différencier les voies correspondant à chacun des sens de circulation, de sorte que les moyens de détection se comportent comme deux moyens de détection vidéo distincts, chacun affectés à un sens de circulation. Le même comportement est également mis en oeuvre pour les moyens de traitement acoustique.

Ainsi, devant le fonctionnement normal du dispositif de détection 1 chacun des moyens de détection délivre de façon régulière au moins une information de présence d'un véhicule et, de préférence une information de présence d'un véhicule ainsi qu'une information d'indice de confiance et le cas échéant, une information de vitesse du véhicule intégrant le sens de déplacement. Une vitesse positive correspond alors à un sens de déplacement normal tandis qu'une vitesse de déplacement négative correspondra à un contresens. Ainsi, les moyens de détection radar délivreront régulièrement une information de présence d'un véhicule $P_r$ un coefficient de confiance lié à l'information de présence $C_r$ et une information de vitesse $V_r$. Ces informations 97 sont délivrées à une fréquence $f_r$, tel qu'un véhicule circulant dans la zone de surveillance radar $Z_r$ à une vitesse de 200 km/h (60m/s) donnera lieu à au moins deux informations et, de préférence, à cinq informations, soit dans le cas d'une étendue de zone de surveillance radar $Z_r$ de 10 m, une fréquence d'analyse $f_r$ égale à 30 hertz, les informations délivrées par les moyens de détection pourront, en outre être associées à une information de datation indiquant l'instant d'émission de l'information. De la même façon, la détection vidéo émettra à une fréquence d'analyse vidéo $f_v$, de préférence également égal à 30 hertz, une information de présence $P_v$, une information de coefficient de confiance $C_v$ et éventuellement une information de vitesse. Les informations 98 issues de la détection vidéo seront également associées à une information de datation.

De la même manière, la détection acoustique fournira une information de présence $P_s$, une information de coefficient de confiance $C_s$ et éventuellement une information de sens de déplacement ou de vitesse $V_s$. Les informations 99 de la détection sonore seront également de préférence émises à une fréquence d'analyse sonore $F_s$, de l'ordre de 30 hertz. Les informations issues de chacun des moyens de détection sonore 10, vidéo 4 et radar 15 sont traitées par l'unité 7 dans le cadre d'une étape de traitement 100 à l'issue de laquelle il est délivré au moins une information 101 telle que de présence ou non d'un véhicule, de préférence associée à une information de vitesse V. Le traitement réalisé par l'unité 7 conformément au procédé de l'invention peut être effectué de différentes manières, par exemple il peut s'agir de comparer les informations des détections pour, lorsque deux informations concordent, conclure à la présence d'un véhicule et ensuite délivrer l'information de vitesse donnée par la détection ayant un indice de confiance le plus élevé.

Il est à noter que, selon l'exemple illustré, les zones de surveillance étant décalées, cette comparaison doit faire intervenir un décalage temporel pour faire la comparaison. En effet, dans le cadre d'un véhicule M se déplaçant dans le sens normal de la circulation $F_1$, il donnera tout d'abord lieu à une détection radar, puis à des détections acoustique et vidéo qui seront décalées dans le temps. Il convient alors d'effectuer une correction temporelle qui correspondra au temps de parcours du véhicule M pour aller de la zone de surveillance aux zones de surveillance acoustique $Z_a$ et vidéo $Z_v$ déterminées en fonction de la vitesse $V_r$ détectée par le système de détection radar. Dans le cadre d'une mise en oeuvre visant à simplifier les calculs et réduire autant que faire se peut les cycles d'itération de manière à réduire les consommations énergétiques liées au traitement, la comparaison peut être effectuée en faisant intervenir une sommation S, après correction temporelle, des informations de présence $P_r$, $P_v$, $P_s$, chacune pondérée du coefficient de confiance correspondant $C_r$, $C_V$, $C_s$, l'information de présence P étant délivrée à l'issue de l'étape de traitement 100 lorsque cette somme dépasse un seuil prédéterminé choisi de telle façon que si une seule des détections fournie une information de présence, le seuil ne peut pas être atteint. Afin de garantir une certaine souplesse d'utilisation, le seuil sera par exemple choisi aussi pour être atteint si seules deux des trois détections fonctionnent.

Ainsi, par exemple la valeur de la somme S sera donnée par la formule suivante :

$$ S = C_\rho \sum P_r + C_V \sum P_V + C_s \sum P_s $$

où :

ΣP_r est le nombre d'échos radar reçus pour un même véhicule ;
- ΣP_v est le nombre d'images sur lesquelles ce même véhicule est visible ;
- ΣP_s est le nombre d'échantillons sonores temporels correspondants à ce même véhicule.

Le coefficient de confiance radar $C_r$ peut alors être calculé à partir des informations de vitesse et de distance fournies à chaque écho éventuellement pondéré par un coefficient dit absolu, tenant compte de l'efficacité générale de la détection de chacun des systèmes, une prépondérance fixe pouvant être donnée aux détections radar et vidéo par rapport aux détections sonores. Le coefficient de confiance vidéo $C_v$ peut être calculé à partir du nombre de pixels actifs pour un véhicule et se trouver éventuellement pondéré d'un coefficient de confiance absolu pour la détection vidéo. Le coefficient de confiance sonore $C_s$ peut quant à lui correspondre à l'inverse de la composante continue du bruit éventuellement pondéré d'un coefficient de confiance absolu.

Ensuite, l'information de présence éventuellement délivrée peut être complétée par une information de vitesse qui serait choisie parmi la vitesse donnée par un système de détection présentant le coefficient de confiance le plus élevé, un tel coefficient de confiance pouvant, par exemple correspondre à un rapport signal bruit.

Par ailleurs, il doit être noté que dans le cas d'un contresens, le véhicule sera d'abord détecté par les moyens de détection sonore et vidéo, puis par les moyens de détection radar, bien entendu, la correction temporelle interviendra également dans ce cadre avant d'effectuer les comparaisons ou les sommations nécessaires à la délivrance d'informations de présence, telles que fournies à l'issue de l'étape de traitement 100.

Une fois cette information disponible à l'issue de l'étape 100, il peut être prévu de la transmettre à destination d'un poste de contrôle (non représenté). A cet effet, le dispositif comprend des moyens de communication hertziens 40 raccordés à l'unité de traitement 7. De tels moyens de communication hertziens peuvent être de toute nature appropriée, et par exemple mettre en oeuvre une communication de type Wifi, GPRS ou autres.

Dans le cadre de l'exemple illustré, les moyens de communication 40 sont, en outre, adaptés pour un fonctionnement en réseau et pour assurer également la répétition des informations délivrées par un autre dispositif de détection identique à celui décrit précédemment. Dans le cadre d'un tel fonctionnement en réseau, il peut également être envisagé une comparaison entre les informations délivrées par les différents dispositifs de détection, cette comparaison pouvant être effectuée au niveau de chacune des unités de traitement 7, ou encore au niveau du poste de contrôle.

Une telle comparaison peut notamment être particulièrement utile dans le cadre de détection d'incidents, tels que des contresens, la redondance de la comparaison et de la détection permettant d'atteindre des taux d'erreurs de l'ordre de un pour un million compatibles avec la fiabilité recherchée pour déclencher des alertes impliquant par exemple l'intervention des forces de l'ordre.

Dans le cadre de la détection de ce type d'incidents, il peut également être envisagé d'équiper le dispositif de détection de systèmes d'acquisition d'images auxiliaires 50, tel que par exemple des caméras vidéo qui assurent un enregistrement régulier d'images qui sont stockées temporairement, pendant par exemple une durée de plusieurs minutes, telle que comprise entre 1 et 10 mn, de manière à générer une sorte de boucle d'enregistrement. Les images de la boucle d'enregistrement seront alors transmises au poste de contrôle uniquement en cas d'évènements particuliers, comme par exemple une détection de contresens, ou encore à la demande du poste de contrôle.

Bien entendu, diverses modifications peuvent être apportées au dispositif et au procédé de détection selon l'invention, dans le cadre des revendications.

Ainsi, selon l'exemple illustré, les moyens de traitement 6, 12, 18 sont distincts et constitués par des unités séparées mais ils pourraient également être intégrés à l'unité de traitement 7, ou encore être intégrés en une ou deux unités distinctes.

De la même manière, selon l'exemple illustré, les moyens de détection radar sont placés pour être les premiers à détecter un véhicule circulant dans un sens normal. Toutefois, les moyens de détection radar pourraient être placés pour détecter un véhicule en sens normal après les moyens de détection vidéo et/ou sonore. Dans une telle configuration, les moyens de détection radar détecteront un véhicule en contresens avant les moyens de détection vidéo et sonore.

**Revendications**

1. Procédé de détection de véhicules sur au moins un tronçon d'une voie de circulation mettant en oeuvre :

   - une détection acoustique comprenant une étape d'acquisition et de traitement du son en provenance d'au moins une zone, dite de surveillance acoustique, du tronçon de voie;

   et au moins un type de détection choisi parmi :

   - une détection vidéo comprenant une étape d'acquisition et traitement d'images vidéo d'au moins une zone, dite de surveillance vidéo du tronçon de voie;
   - une détection radar comprenant une étape d'émission d'un rayonnement électromagnétique micro-onde en direction d'au moins une zone, dite de surveillance radar, du tronçon de voie et une étape d'acquisition et de traitement du rayonnement électromagnétique micro-onde réfléchi,

   et comprenant au moins une étape de traitement des résultats des détections optique et/ou sonore et/ou radar pour délivrer une information présence ou non d'au moins un véhicule.

2. Procédé de détection selon la revendication 1, **caractérisé en ce qu'**il met en oeuvre les trois types de détection et **en ce que** l'étape de traitement des résultats comprend une comparaison des résultats pour conclure à la présence ou non du véhicule en cas de concordance des résultats d'au moins deux des trois types de détections

3. Procédé de détection selon la revendication 2, **caractérisé en ce que** l'étape de traitement des résultats conclue à la présence du véhicule en cas de concordance des résultats des trois types de détections.

4. Procédé de détection selon l'une des revendications 1 à 3, **caractérisé en ce qu'**au moins une des zones de surveillance est distincte d'au moins une autre zone de surveillance.

5. Procédé de détection selon l'une des revendication 1 à 4, **caractérisé en ce que** chaque détection effectue les étapes d'acquisition et de traitement à une fréquence suffisante pour permettre au moins deux acquisitions d'un véhicule circulant dans la zone de surveillance à une vitesse de référence donnée.

6. Procédé selon la revendication 5, **caractérisé en ce que** le traitement des résultats est effectué à une fréquence inférieure ou égale à la plus petite des fréquences d'acquisition.

7. Procédé selon l'une des revendications 1 à 6, **caractérisé en ce que** chaque détection fournit au moins une information de présence d'un mobile dans la zone de surveillance et un indice de confiance lié à l'information de présence.

8. Procédé selon la revendication 7, **caractérisé en ce que** chaque détection fournit des informations de sens et/ou de vitesse de déplacement du mobile.

9. Procédé selon la revendication 7 ou 8, **caractérisé en ce qu'**au moins une détection fournit des informations de dimension du mobile.

10. Procédé selon l'une des revendication 1 à 9, **caractérisé en ce que** la comparaison entre le résultat de l'une des détections avec le résultat d'une autre détection est effectuée sur la base d'un décalage temporel déterminé en fonction de la vitesse, éventuellement du sens du déplacement du véhicule et de la distance entre les zones de surveillance des détections dont les résultats sont comparés.

11. Procédé de détection selon l'une des revendications précédentes, **caractérisé en ce qu'**à l'issue de l'étape de traitement il est délivré au moins une des informations suivante :

   - présence de véhicule,
   - vitesse de véhicule,
   - vitesse moyenne,
   - taux d'occupation des voies,
   - débit de véhicules,
   - catégorie ou taille des véhicules,
   - présence d'un véhicule en contre sens.

12. Dispositif de détection de véhicules sur au moins un tronçon (T) d'une voie de circulation (V) comprenant :

- des moyens (10) de détection acoustique comprenant au moins un micro phone (11) disposé de manière à enregistrer le son en provenance d'au moins une zone ($Z_a$), dite de surveillance acoustique, du tronçon (T) de voie (V) et des moyens (12) de traitement du son ;

et au moins un moyen de détection choisi parmi :

- des moyens (4) détection vidéo comprenant une camera vidéo (5) disposée de manière à surveiller au moins une zone ($Z_V$), dite de surveillance vidéo du tronçon (T) de voie (V) et des moyens (6) de traitement d'images vidéo fournies par la camera vidéo (5) ;
- des moyen (15) de détection radar comprenant une source de micro-ondes (16) émettant en direction d'au moins une zone ($Z_r$), dite de surveillance radar, du tronçon (T) de voie (V), des moyens (17) de réception du rayonnement électromagnétique micro-onde réfléchi, et des moyens (18) de traitement du rayonnement réfléchi ;

ainsi qu'une unité de traitement (7) raccordée au moyens de détections vidéo (4), sonore (10) et radar (15) et adaptée pour délivrer au moins une information de présence ou non d'au moins un véhicule ; les moyens de traitement 12, 18) et l'unité de traitement (7) étant adaptés pour mettre en oeuvre le procédé selon l'une des revendications 1 à 11.

**13.** Dispositif de détection selon la revendication 12, **caractérisé en ce qu'**il comprend des moyens (40) de communication hertzienne raccordés à l'unité de traitement (7) et adaptés pour au moins assurer la transmission des informations issues de l'unité de traitement (7) et pour relayer des informations en provenance d'au moins un autre dispositif de détection (1).

**14.** Dispositif de détection selon la revendication 12 ou 13, **caractérisé en ce qu'**il comprend au moins une batterie électrique (20) d'alimentation du dispositif et des moyens (21) de charge de cette batterie comprenant au moins un panneau photovoltaïque.

**15.** Dispositif de détection selon l'une des revendications 12 à 14, **caractérisé en ce qu'**il comprend un mat ou poteau (2) sur lequel sont adaptés en hauteur les différents éléments constitutifs du dispositif.

Fig.1

*Fig.2*

*Fig.3*

EP 2 096 611 A1

Europäisches Patentamt

European Patent Office

Office européen des brevets

**RAPPORT DE RECHERCHE EUROPEENNE**

Numéro de la demande

EP 09 15 3946

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>A | DE 197 29 915 A1 (MANNESMANN AG [DE])<br>27 août 1998 (1998-08-27)<br>* page 3, ligne 52 - ligne 53 *<br>* page 4, ligne 9 - ligne 11;<br>revendication 5 *<br>----- | 1-5,<br>11-15<br>6-10 | INV.<br>G08G1/04 |
| A | DE 297 09 286 U1 (SIEMENS AG [DE]; ASIM ENGINEERING AG [CH])<br>24 juillet 1997 (1997-07-24)<br>* page 3, ligne 3 - ligne 15 *<br>* page 5, ligne 12 - ligne 29 *<br>----- | 1-15 | |
| A | US 5 357 196 A (ITO AKIO [JP])<br>18 octobre 1994 (1994-10-18)<br>----- | | |

DOMAINES TECHNIQUES RECHERCHES (IPC)

G08G

Le présent rapport a été établi pour toutes les revendications

| Lieu de la recherche | Date d'achèvement de la recherche | Examinateur |
|---|---|---|
| La Haye | 7 juillet 2009 | Créchet, Patrick |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 09 15 3946

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

07-07-2009

| Document brevet cité au rapport de recherche | | Date de publication | Membre(s) de la famille de brevet(s) | | Date de publication |
|---|---|---|---|---|---|
| DE 19729915 | A1 | 27-08-1998 | AUCUN | | |
| DE 29709286 | U1 | 24-07-1997 | DE | 29701998 U1 | 10-04-1997 |
| US 5357196 | A | 18-10-1994 | DE | 4225819 A1 | 11-02-1993 |

EPO FORM P0460

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2675610
- WO 2005073736 A
- FR 2812402
- EP 0396432 A
- EP 588815 A
- EP 1710767 A
- GB 2389947 A
- GB 2425010 A
- US 20070257819 A